# EUROPEAN PATENT SPECIFICATION

(11) **EP 3 797 586 B1**
(45) Date of publication and mention of the grant of the patent: **30.08.2023**
(21) Application number: 20198315.2
(22) Date of filing: 25.09.2020
(51) Int. Cl.: A01K 61/10, C02F 1/48, C02F 3/32

(54) **METHOD FOR TREATING PHYTOPLANKTON BY NON-TRADITIONAL BIOMANIPULATION**
VERFAHREN ZUR BEHANDLUNG VON PHYTOPLANKTON DURCH NICHT-HERKÖMMLICHE BIOMANIPULATION
MÉTHODE DE TRAITEMENT DE PHYTOPLANCTON PAR BIOMANIPULATION NON TRADITIONNELLE

(30) Priority: 29.09.2019 CN 201910931143
(43) Date of publication of application: 31.03.2021
(73) Proprietor: Chinese Research Academy Of Environmental Sciences, Beijing 100012 (CN)
(72) Inventor: ZHANG, Lieyu, Beijing, 100012 (CN); LI, Caole, Beijing, 100012 (CN); LI, Guowen, Beijing, 100012 (CN); LI, Xiaoguang, Beijing, 100012 (CN); LI, Jiaqian, Beijing, 100012 (CN); LI, Wei, Beijing, 100012 (CN); CHE, Lulu, Beijing, 100012 (CN); ZHU, Qiuheng, Beijing, 100012 (CN); ZHAO, Chen, Beijing, 100012 (CN)
(74) Representative: Manitz Finsterwald Patent- und Rechtsanwaltspartnerschaft mbB

(56) References cited:
- CN-A- 107 698 027
- JP-A- H11 206 269
- JP-A- 2005 245 319
- US-A1- 2012 058 248

## Description

### TECHNICAL FIELD

The present invention relates to the field of water environment treatment, and particularly, relates to a method for treating phytoplankton by non-traditional biomanipulation.

### BACKGROUND

Phytoplankton is an ecological concept and refers to microphyte living in a planktonic manner in water, and generally, the phytoplankton refers to planktonic algae and is an autotroph part in plankton. The phytoplankton widely exists in rivers, lakes and oceans and is mostly distributed on the upper layer of a water area, phytoplankton individuals are tiny and can only be observed by a microscope, and the phytoplankton is very high in reproduction speed. The phytoplankton mainly includes eight categories of planktonic species: cyanophyta, chlorophyta, bacillariophyta, chrysophyta, xanthophyta, pyrroptata, cryptophyta and euglenophyta.

Non-traditional biomanipulation is a biomanipulation method of controlling predatory fishes and stocking filter-feeding fishes (e.g., silver carp and bighead carp) and the like which eat the phytoplankton to directly feed on the phytoplankton, and utilises the filter-feeding fishes which have a special feeding characteristic and digestion mechanism and are stable in community structure to directly control the phytoplankton.

In the application practice of non-traditional biomanipulation, the silver carp and the bighead carp become the most common species due to the advantages of high artificial reproduction survival rate, long survival time, wide food spectrum, easiness for control of populations due to incapacity of natural reproduction in lakes, and the like.

The filter-feeding fishes are selected to control the algae due to their special filter-feeding organs, their special filter-feeding organs include the gill rake, the gill rake net, the palatal rugae and the gill rake tube, and in the filter-feeding process, the algae smaller than a gill pore will be leaked along with water flow, the algae larger than the gill pore will be intercepted and sent to the digestive tract. The silver carp, the bighead carp and grazing zooplankton are the same in feeding mode, but large-sized zooplankton (e.g., cladocerans) generally can only carry out filter-feeding on small phytoplankton of which the specification is smaller than 40µm, while the silver carp and the bighead carp can carry out filter-feeding on phytoplankton (or groups) of which the specification is 10µm to several millimeters, and thus, the silver carp and the bighead carp can feed on filamentous cyanophyta or cyanophyta formed into groups.

However, although the silver carp and the bighead carp can effectively eliminate the phytoplankton including bacillariophyta, chrysophyta, cryptophyta, part of pyrroptata and the like in a rapid feeding mode, the silver carp and the bighead carp have a very low actual digestion utilisation rate on the cyanophyta, there is a great amount of indigested cyanophyta in faeces of the silver carp and the bighead carp, and those cyanophyta cells can rapidly return to a water ecosystem to directly participate in reproduction of groups. Related technologies are known from US 2012/058248 A1, CN 107 698 027 A, JP H11 206269 A, and JP 2005 245319 A.

### SUMMARY

For ecological treatment for a water environment, the present invention provides a method for treating phytoplankton by non-traditional biomanipulation.

The technical solution of the present invention is as follows:
the present invention provides a method for treating phytoplankton by non-traditional biomanipulation, and the method specifically comprises:
(1) introducing filter-feeding fishes into an area where the to-be-treated phytoplankton is located;
(2) carrying out premagnetisation on a water body entering the area; and
(3) arranging an electromagnetic type magnetisation reactor in a direction perpendicular to water flow in the area to carry out intermittent magnetisation, wherein the magnetic field intensity is 50mT to 2,000mT, an intermittent period is 3h to 120h, and the one-time magnetisation time is 5min to 300min.

Wherein, the filter-feeding fishes are silver carp and/or bighead carp, and preferably, a put-in ratio of the silver carp to the bighead carp is 3:1.

The water body is input into a multi-stage magnetisation device via a water pump to be subjected to premagnetisation (a bypass water body premagnetisation device is established in the periphery of the water body), and the magnetic field intensity is 300mT to 1,500mT, and the magnetisation time is 1 min to 120 min; and preferably, the water body successively passes through magnetic fields at distances of 10m, 15m and 20m, of which the magnetic field intensities are 1,500mT, 500mT and 300mT, respectively, at a flow rate of 0.1m/s to 2m/s.

Further preferably, in the process of carrying out intermittent magnetisation on the to-be-treated area, when the water body is in a light eutrophic state (by composite nutritional index state), it is proper to adopt the magnetic field intensity of 50mT to 500mT, the intermittent period of 3h to 60h and the one-time treatment time of 5min to 60min; when the water body is in a moderate eutrophic state (by composite nutritional index state), it is proper to adopt the magnetic field intensity of 200mT to 1,200mT, the intermittent period of 10h to 80h and the one-time treatment time of 30min to 150min; and when the water body is in a heavy eutrophic state (by composite nutritional index state), it is proper to adopt the magnetic field intensity of 300mT to 2,000mT, the intermittent period of 10h to 120h and the one-time treatment time of 60min to 300min.

The water body takes the motion of cutting magnetic lines in the magnetic field; hydrogen bonds, the Van der Waals force and the like of water molecules are also changed under the action of the magnetic field, and the change includes changes of a bond length and a bond angle of the hydrogen bonds, so that physical and chemical properties, such as transparency, a surface tension of the water body and solubility, of the water body are changed; macro associated water molecule groups are changed into micro molecule groups and even single water molecules; by regulating different magnetic field parameters, electron transport in an algae photosynthesis system can be directly influenced and particularly, the electron transport activity of a photosynthetic system I is inhibited, resulting in reduction of the activity of algae cells; and meanwhile, magnetised water can generate an inhibiting effect on cell division of the phytoplankton so as to inhibit growth of algae.

The magnetised water enters a river and lake water body to enable a biological cell membrane osmotic pressure of fishes such as the silver carp and the bighead carp to be increased so as to improve growth metabolism and improve cold tolerance of fishes; and meanwhile, the magnetised water improves the activities of amylase and plant cellulase in digestive systems of fishes, and improves algae digestibility of the silver carp and the bighead carp.

The magnetised water has a strong inhibiting effect on bacterial reproduction, and thus, in one aspect, the risk that fishes are infected with diseases is reduced, and the survival rate of the fishes is improved, and in the other aspect, faeces of the silver carp and the bighead carp cannot be decomposed by bacteria so as not to cause secondary rapid multiplication of the algae; and on the basis of a synergistic effect of the magnetised water, when the outbreak of the algae is inhibited, bioactivity, digestive efficiency, the survival rate and the cold tolerance of the fishes are improved so as to achieve an effect of treating the phytoplankton.

Raw materials involved in the present invention are all common commercial products, and operations involved in the present invention are all conventional operations in the art, unless otherwise specifically illustrated.

On the basis of the general knowledge in the art, the above-mentioned preferred conditions can be combined with each other to obtain specific embodiments.

The present invention has the beneficial effects that:
according to the present invention, by carrying out magnetisation treatment on the river and lake water body, in one aspect, the magnetised water is utilised to inhibit the activity of the algae cells by influencing electron transport; in another aspect, the magnetised water is utilised to improve the activities of amylase and plant cellulase in the digestive systems of the fishes so as to improve the algae digestibility of the silver carp and the bighead carp; in yet another aspect, the magnetised water is utilised to increase the biological cell membrane osmotic pressure of the fishes such as the silver carp and the bighead carp and improve metabolism of the fishes; and in the final aspect, the magnetised water is utilised to inhibit reproduction of bacteria, so that while the survival rate of the fishes is improved, decomposition of fish faeces by the bacteria is also reduced, and the opportunity of the secondary algae outbreak is avoided or reduced.

### DETAILED DESCRIPTION

Preferred embodiments of the present invention will be illustrated in detail below in connection with embodiments. It should be understood that embodiments given below are merely used for illustration, rather than limiting the scope of the present invention. Those of ordinary skill in the art, without departing from the scope of the claims, can make various modifications and replacements to the present invention.

Experimental methods used in the below-mentioned embodiments, unless otherwise specifically illustrated, are all conventional methods.

Materials, reagents and the like used in the below-mentioned embodiments, unless otherwise specifically illustrated, all can be obtained by commercial approaches.

### Embodiment 1

A river and lake system is constructed in a laboratory by simulating and utilising a method of the present invention, a lake model is selected and numbered as A, and a reactor has a length of 100cm, a width of 50cm and a height of 50cm. A water inlet pipe and a water outlet pipe of which diameters are 100mm are respectively arranged on the left side and the right side of the reactor. Cyanophyta is added into the system in advance, and is counted under the microscope. A multi-stage magnetisation device with magnetic field intensity of 50mT to 2,000mT is arranged at a bypass of the model to carry out pretreatment, and intake water of the device has a flow rate of 0.1m/s and successively passes through magnetic fields at distances of 1m, 1.5m and 2m, of which the magnetic field intensities are 1,500mT, 500mT and 300mT, respectively. An electromagnetic type magnetisation reactor is vertically arranged in the model to carry out intermittent magnetisation, wherein the magnetic field intensity is 800mT, an intermittent period is 24h, and the one-time magnetisation time is 180min. In the lake system, fishes are stocked according to a ratio of silver carp to bighead carp being 3:1, a water temperature is controlled to be 25 DEG C which is an algae outbreak preferential temperature, and the intake water is controlled to achieve COD concentration of 80mg/L, TN concentration of 10mg/L and total phosphorus concentration of 0.5mg/L.

After the model starts the water inlet and outlet operation, a water body premagnetisation reactor and a model magnetisation reactor are started up, wherein the intermittent magnetisation period of the electromagnetic type magnetisation reactor is 24h, and the magnetisation time of the electromagnetic type magnetisation reactor is 180min; the system continuously operates for one month, phytoplankton is collected by a phytoplankton net, species of the phytoplankton are observed under the microscope, and the cyanophyta is counted; and it is found that non-traditional biomanipulation based on the magnetised water has a very high inhibiting effect on outbreak of the cyanophyta, and compared to the number of the cyanophyta under the microscope before the system operates, the number of the cyanophyta after the system operates is reduced by 80%.

### Contrast Group:

A river and lake system is constructed in a laboratory by simulation, a lake model is selected and numbered as B, and a reactor has a length of 100cm, a width of 50cm and a height of 50cm. A water inlet pipe and a water outlet pipe of which diameters are 100mm are respectively arranged on the left side and the right side of the reactor. Cyanophyta is added into the system in advance, and is counted under the microscope. In the system, fishes are stocked according to a ratio of silver carp to bighead carp being 3:1, a water temperature is controlled to be 25 DEG C which is an algae outbreak preferential temperature, and intake water is controlled to achieve COD concentration of 80mg/L, TN concentration of 10mg/L and total phosphorus concentration of 0.5mg/L.

After the system operates for one month, the phytoplankton is collected by a phytoplankton net, species of the phytoplankton are observed under the microscope, and the cyanophyta is counted; and compared to the number of the cyanophyta under the microscope before the system operates, the number of the cyanophyta after the system operates is increased by 180%.

### Embodiment 2

Pilot experimental equipment is set up in an experimental base, an artificial lake model is selected and numbered as C, and the artificial lake has a water surface area of 200m² and an average water depth of 50cm. Zooplankton and phytoplankton are collected by a zooplankton and phytoplankton net, species of the zooplankton and the phytoplankton are observed under the microscope, and the cyanophyta is counted. A multi-stage magnetisation device with magnetic field intensity of 50mT to 2,000mT is arranged at a bypass of the artificial lake to carry out pretreatment, and intake water of the device has a flow rate of 0.5m/s and successively passes through magnetic fields at distances of 3m, 4.5m and 6m, of which the magnetic field intensities are 1,500mT, 500mT and 300mT, respectively. An electromagnetic type magnetisation reactor is vertically arranged in the artificial lake to carry out intermittent magnetisation, wherein the magnetic field intensity is 800mT, an intermittent period is 24h, and the one-time magnetisation time is 180min. In the lake system, fishes are stocked according to a ratio of silver carp to bighead carp being 3: 1, a water temperature is controlled to be 25 DEG C which is an algae outbreak preferential temperature, and the intake water is controlled to achieve COD concentration of 80mg/L, TN concentration of 10mg/L and total phosphorus concentration of 0.5mg/L.

After the model starts the water inlet and outlet operation, a water body premagnetisation reactor and a model magnetisation reactor are started up, wherein the intermittent magnetisation period of the electromagnetic type magnetisation reactor is 12h, and the magnetisation time of the electromagnetic type magnetisation reactor is 240min; the system continuously operates for one month, phytoplankton is collected by a phytoplankton net, species of the phytoplankton are observed under the microscope, and the cyanophyta is counted; and it is found that non-traditional biomanipulation based on the magnetised water has a very high inhibiting effect on outbreak of the cyanophyta, and compared to the number of the cyanophyta under the microscope before the system operates, the number of the cyanophyta after the system operates is reduced by 75%.

### Contrast Group:

Pilot experimental equipment is set up in an experimental base, an artificial lake model is selected and numbered as D, and the artificial lake has a water surface area of 200m² and an average water depth of 50cm. Zooplankton and phytoplankton are collected by a zooplankton and phytoplankton net, species of the zooplankton and the phytoplankton are observed under the microscope, and the cyanophyta is counted. In the system, fishes are stocked according to a ratio of silver carp to bighead carp being 3: 1, a water temperature is controlled to be 25 DEG C which is an algae outbreak preferential temperature, and intake water is controlled to achieve COD concentration of 80mg/L, TN concentration of 10mg/L and total phosphorus concentration of 0.5mg/L.

After the system operates for one month, the phytoplankton is collected by a phytoplankton net, species of the phytoplankton are observed under the microscope, and the cyanophyta is counted; and compared to the number of the cyanophyta under the microscope before the system operates, the number of the cyanophyta after the system operates is increased by 200%.

Although the present invention has been described above in great detail with general descriptions and specific embodiments, on the basis of the present invention as defined by the claims, various modifications or improvements may be made, which is apparent to those of ordinary skill in the art.

## Claims

1. A method for treating phytoplankton by non-traditional biomanipulation, **characterized by** specifically comprising:
(1) introducing filter-feeding fishes into an area where the to-be-treated phytoplankton is located;
(2) carrying out premagnetisation on a water body entering the area; and
(3) arranging an electromagnetic type magnetisation reactor in a direction perpendicular to water flow in the area to carry out intermittent magnetisation on the water body, wherein the magnetic field intensity is 50mT to 2,000mT, an intermittent period is 3h to 240h, and the one-time magnetisation time is 5min to 300min.

2. The method according to claim 1, **characterized in that** premagnetisation is carried out on the water body entering the area where the to-be-treated phytoplankton is located in a multi-stage magnetisation device, wherein the magnetic field intensity is 300mT to 1,500mT, and the magnetisation time is 1min to 120min.

3. The method according to claim 2, **characterized in that** the water body entering the area where the to-be-treated phytoplankton is located is enabled to successively pass through magnetic fields at distances of 10m, 15m and 20m, of which the magnetic field intensities are 1,500mT, 500mT and 300mT, respectively, at a flow rate of 0.1m/s to 2m/s.

4. The method according to claim 1, **characterized in that** the filter-feeding fishes are silver carp and/or bighead carp.

5. The method according to claim 4, **characterized in that** a put-in ratio of the silver carp to the bighead carp is 3:1.

6. The method according to claim 4 or 5, **characterized in that** when intermittent magnetisation is carried out on the water body, for the water body in a light eutrophic state, the magnetic field intensity for intermittent magnetisation is 50mT to 500mT, the intermittent period is 3h to 60h, and the one-time magnetisation treatment time is 5min to 60min.

7. The method according to claim 4 or 5, **characterized in that** when intermittent magnetisation is carried out on the water body, for the water body in a moderate eutrophic state, the magnetic field intensity for intermittent magnetisation is 200mT to 1,200mT, the intermittent period is 10h to 80h, and the one-time magnetisation treatment time is 30min to 150min.

8. The method according to claim 4 or 5, **characterized in that** when intermittent magnetisation is carried out on the water body, for the water body in a heavy eutrophic state, the magnetic field intensity for intermittent magnetisation is 300mT to 2,000mT, the intermittent period is 10h to 120h, and the one-time magnetisation treatment time is 60min to 300min.

## Patentansprüche

1. Verfahren zum Behandeln von Phytoplankton durch nicht-traditionelle Biomanipulation, **dadurch gekennzeichnet, dass** es im Einzelnen umfasst:
(1) Einbringen filtrierender Fische in einen Bereich, wo sich das zu behandelnde Phytoplankton befindet;
(2) Durchführen einer Vormagnetisierung an einer Wassermasse, die in den Bereich eintritt; und
(3) Anordnen eines Magnetisierungsreaktors elektromagnetischen Typs in einer Richtung senkrecht zur Wasserströmung in dem Bereich, um eine periodische Magnetisierung an der Wassermasse durchzuführen, wobei die Magnetfeldintensität 50 mT bis 2.000 mT beträgt, eine Periodendauer 3 h bis 240 h beträgt, und die einmalige Magnetisierungszeit 5 min bis 300 min beträgt.

2. Verfahren nach Anspruch 1, **dadurch gekennzeichnet, dass** die Vormagnetisierung an der Wassermasse, die in den Bereich eintritt, wo sich das zu behandelnde Phytoplankton befindet, in einer mehrstufigen Magnetisierungsvorrichtung durchgeführt wird, wobei die Magnetfeldintensität 300 mT bis 1.500 mT beträgt, und die Magnetisierungszeit 1 min bis 120 min beträgt.

3. Verfahren nach Anspruch 2, **dadurch gekennzeichnet, dass** es der Wassermasse, die in den Bereich eintritt, wo sich das zu behandelnde Phytoplankton befindet, ermöglicht wird, nacheinander Magnetfelder in Abständen von 10 m, 15 m und 20 m, deren Magnetfeldintensitäten jeweils 1.500 mT, 500 mT und 300 mT betragen, mit einer Strömungsgeschwindigkeit von 0,1 m/s bis 2 m/s zu durchlaufen.

4. Verfahren nach Anspruch 1, **dadurch gekennzeichnet, dass** die filtrierenden Fische Silberkarpfen und/oder Marmorkarpfen sind.

5. Verfahren nach Anspruch 4, **dadurch gekennzeichnet, dass** ein Einsetz-Verhältnis der Silberkarpfen zu den Marmorkarpfen 3:1 beträgt.

6. Verfahren nach Anspruch 4 oder 5, **dadurch gekennzeichnet, dass**, wenn die periodische Magnetisierung an der Wassermasse durchgeführt wird, für die Wassermasse in einem leicht eutrophen Zustand die Magnetfeldintensität für die periodische Magnetisierung 50 mT bis 500 mT beträgt, die Periodendauer 3 h bis 60 h beträgt, und die einmalige Magnetisierungsbehandlungszeit 5 min bis 60 min beträgt.

7. Verfahren nach Anspruch 4 oder 5, **dadurch gekennzeichnet, dass**, wenn die periodische Magnetisierung an der Wassermasse durchgeführt wird, für die Wassermasse in einem mäßig eutrophen Zustand die Magnetfeldintensität für die periodische Magnetisierung 200 mT bis 1.200 mT beträgt, die Periodendauer 10 h bis 80 h beträgt, und die einmalige Magnetisierungsbehandlungszeit 30 min bis 150 min beträgt.

8. Verfahren nach Anspruch 4 oder 5, **dadurch gekennzeichnet, dass**, wenn die periodische Magnetisierung an der Wassermasse durchgeführt wird, für die Wassermasse in einem stark eutrophen Zustand die Magnetfeldintensität für die periodische Magnetisierung 300 mT bis 2.000 mT beträgt, die Periodendauer 10 h bis 120 h beträgt, und die einmalige Magnetisierungsbehandlungszeit 60 min bis 300 min beträgt.

## Revendications

1. Procédé de traitement de phytoplancton par biomanipulation non traditionnelle, **caractérisé en ce qu'**il consiste spécifiquement à :
(1) introduire des poissons filtreurs dans une zone où se trouve le phytoplancton à traiter ;
(2) effectuer une pré-magnétisation sur une masse d'eau entrant dans la zone ; et
(3) disposer un réacteur de magnétisation de type électromagnétique dans une direction perpendiculaire à l'écoulement d'eau dans la zone pour effectuer une magnétisation intermittente sur la masse d'eau, l'intensité de champ magnétique étant de 50 mT à 2 000 mT, la période d'intermittence étant de 3 h à 240 h et la durée de magnétisation unitaire étant de 5 min à 300 min.

2. Procédé selon la revendication 1, **caractérisé en ce que** la pré-magnétisation est effectuée sur la masse d'eau entrant dans la zone où se trouve le phytoplancton à traiter dans un dispositif de magnétisation à plusieurs étages, l'intensité de champ magnétique étant de 300 mT à 1 500 mT et la durée de magnétisation étant de 1 min à 120 min.

3. Procédé selon la revendication 2, **caractérisé en ce que** la masse d'eau entrant dans la zone où se trouve le phytoplancton à traiter traverse successivement des champs magnétiques à des distances de 10 m, 15 m et 20 m, dont les intensités de champ magnétique sont respectivement de 1 500 mT, 500 mT et 300 mT, à une vitesse d'écoulement de 0,1 m/s à 2 m/s.

4. Procédé selon la revendication 1, **caractérisé en ce que** les poissons filtreurs sont des carpes argentées et/ou des carpes à grosse tête.

5. Procédé selon la revendication 4, **caractérisé en ce que** le rapport entre la carpe argentée et la carpe à grosse tête est de 3:1.

6. Procédé selon la revendication 4 ou la revendication 5, **caractérisé en ce que**, lorsque la magnétisation intermittente est effectuée sur la masse d'eau, pour la masse d'eau en état d'eutrophisation légère, l'intensité de champ magnétique pour la magnétisation intermittente est de 50 mT à 500 mT, la période d'intermittence est de 3 h à 60 h et la durée de traitement par magnétisation unitaire est de 5 min à 60 min.

7. Procédé selon la revendication 4 ou la revendication 5, **caractérisé en ce que**, lorsque la magnétisation intermittente est effectuée sur la masse d'eau, pour la masse d'eau en état d'eutrophisation modérée, l'intensité de champ magnétique pour la magnétisation intermittente est de 200 mT à 1 200 mT, la période d'intermittence est de 10 h à 80 h et la durée de traitement par magnétisation unitaire est de 30 min à 150 min.

8. Procédé selon la revendication 4 ou la revendication 5, **caractérisé en ce que**, lorsque la magnétisation intermittente est effectuée sur la masse d'eau, pour la masse d'eau en état d'eutrophisation lourde, l'intensité de champ magnétique pour la magnétisation intermittente est de 300 mT à 2 000 mT, la période d'intermittence est de 10 h à 120 h et la durée de traitement par magnétisation unitaire est de 60 min à 300 min.
